(19) Europäisches Patentamt
European Patent Office
Office européen des brevets

(11) Veröffentlichungsnummer: **0 058 891**
**B1**

# (12) EUROPÄISCHE PATENTSCHRIFT

(45) Veröffentlichungstag der Patentschrift: **05.12.84**

(51) Int. Cl.³: **H 02 P 5/16**

(21) Anmeldenummer: **82101025.3**

(22) Anmeldetag: **11.02.82**

(54) **Verfahren zur Drehzahlregelung einer elektrischen Maschine bei lückendem und nichtlückendem Strom.**

(30) Priorität: **20.02.81 JP 22930/81**

(43) Veröffentlichungstag der Anmeldung: **01.09.82 Patentblatt 82/35**

(45) Bekanntmachung des Hinweises auf die Patenterteilung: **05.12.84 Patentblatt 84/49**

(84) Benannte Vertragsstaaten: **AT BE CH DE FR GB IT LI SE**

(56) Entgegenhaltungen:
**US - A - 4 090 116**

**Soviet Inventions Illustrated Woche C01, 13. Februar 1980 Sektion R53**
**IEEE TRANSACTIONS ON INDUSTRY APPLICATIONS, Band IA-16, Nr. 3, Mai/Juni 1980 New York T. OHMAE et al. "A Microprocessor-Controlled Fast-Response Speed Regulator with Dual Mode Current Loop for DCM Drives" Seiten 388 bis 394.**
**REGELUNGSTECHNIK, Band 26, Nr. 2, Februar 1978, München E. BÜHLER "Eine zeitoptimale Thyristor-Stromregelung unter Einsatz eines Mikroprozessors" Seiten 37 bis 43**

(73) Patentinhaber: **FUJI ELECTRIC CO. LTD., 1-1, Tanabeshinden, Kawasaki-ku, Kawasaki 210 (JP)**

(72) Erfinder: **Tetsuo, Izumi, Dipl.-Ing., No. 9-4, Tamadaira 1-chome, Hino-shi Tokyo (JP)**
Erfinder: **Satoru, Ozaki, Dipl.-Ing., No. 12-16, Futaba 1-chome, Shinagawa-ku Tokyo (JP)**

(74) Vertreter: **Mehl, Ernst, Dipl.-Ing. et al, Postfach 22 01 76, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Drehzahlregelung einer elektrischen Maschine entsprechend dem Oberbegriff des Anspruches 1. Die Drehzahlregelung der Maschine erfolgt über eine Umrichtereinrichtung, die als Regeleinrichtung die Maschine von einem Versorgungsnetz speist. Insbesondere soll die erfindungsgemässe Vorrichtung unter Verwendung eines Mikrocomputers aufgebaut werden können.

Die Drehzahlregelung von Gleichstrommotoren über einen Umrichter als Regeleinrichtung oder eines ähnlichen regelbaren Motors muss unter allen Lastbedingungen stabil und schnell erfolgen. Gleichstrommotoren, die über einen Thyristor-Umrichter gespeist werden, sind meist analog geregelt. Es ist bekannt, dass bei derartigen analog geregelten umrichtergespeisten Gleichstrommotoren der Strom bei geringer Last oder im Leerlauf lückt, wobei die Verstärkung einer Stromregelung gering ist und keine Zeitkonstante aufweist, woraus ein schlechtes Stromregelverhalten und — unter besonders ungünstigen Bedingungen — Instabilität erfolgen. Der Motor kann also nicht auf die angestrebte Weise geregelt werden. Um diese durch das Stromlücken hervorgerufenen Schwierigkeiten zu vermeiden, sind verschiedene Vorschläge gemacht worden, die die Verstärkung unter Verwendung mehrerer Regelkreise für die Stromregelung erhöhen und ferner vorsehen, die Gesamtverstärkung durch Übergang auf eine adaptive Verstärkung in dem Masse zu verändern, in dem der Strom lückt. Dies erfordert jedoch zusätzlichen Schaltungsaufwand und führt letztlich zu einer komplizierten Regelvorrichtung.

Es wurden auch schon Vorschläge ausgearbeitet, einen Mikrocomputer für eine digitale Drehzahlregelung zu verwenden. Aber auch eine digitale Regeleinrichtung leidet an diesen Schwierigkeiten.

Aufgabe der vorliegenden Erfindung ist es, ein Verfahren zur Drehzahlregelung eines elektrischen Motors zu schaffen, die sich insbesondere bei einer Digitalisierung ohne grossen Schaltungsaufwand durchführen lässt, wobei die erwähnten Schwierigkeiten durch einen nur geringen Programmaufwand vermieden werden können.

Diese Aufgabe wird gelöst durch ein Verfahren mit den Merkmalen des Anspruches 1. Als Thyristor-Umrichteranordnung können insbesondere zwei antiparallele Umrichter vorgesehen sein, die die elektrische Maschine aus einem Versorgungsnetz speisen, wobei mit den Zündimpulsen bei gegebener Drehmomentrichtung jeweils nur Thyristoren eines Umrichters gezündet werden.

Die Zündwinkel der Thyristoren werden mittels arithmetischer Operationen («Regel-Operationen») vorgegeben, durch die die Maschinendrehzahl auf einen eingegebenen Sollwert eingeregelt wird. Gemäss der Erfindung wird vom Zündzeitpunkt eines Thyristors als Bezugszeitpunkt zum Bestimmen des folgenden Zündzeitpunktes für den nächsten Thyristor ausgegangen. Der folgende Zündzeitpunkt wird jeweils durch eine arithmetische Regeloperation bestimmt, durch die der Zündzeitpunkt entsprechend den jeweiligen, durch die arithmetische Regeloperation erfassten Bedingungen korrigiert wird. Vor dem Durchführen der arithmetischen Regeloperation wird dabei entschieden, ob der Maschinenstrom lückt oder nicht. Bei nichtlückendem Strom wird eine Regeloperation in Abhängigkeit von sowohl dem Maschinenstrom wie der Maschinendrehzahl durchgeführt, wobei einer arithmetischen Teil-Regeloperation gegebenenfalls eine zweite arithmetische Teil-Regeloperation überlagert wird. Bei lückendem Strom wird jedoch eine nur von der Maschinendrehzahl abhängige Regeloperation durchgeführt.

Sind zwei antiparallele Umrichter als Umrichteranordnung vorgesehen, so kann vorteilhaft anschliessend andie Regeloperation in einer weiteren arithmetischen Operation die Richtung des Drehmomentes festgestellt werden, mit dem die Maschine entsprechend dem eingegebenen Drehzahl-Sollwert betrieben werden soll. Ändert sich die für den folgenden Zündimpuls festgestellte Drehmoment-Richtung gegenüber der zuletzt festgestellten Drehmoment-Richtung, so wird mit dem folgenden Zündimpuls dann jeweils der andere Umrichter der Umrichter-Anordnung angesteuert.

Anhand eines Ausführungsbeispieles und zweier Figuren wird die Erfindung näher erläutert.

Fig. 1 zeigt schematisch die Anordnung der Bauteile einer erfindungsgemässen Vorrichtung für die Drehzahlregelung einer Gleichstrommaschine,

Fig. 2 stellt das Flussdiagramm dar, nach dem die erfindungsgemässe Vorrichtung arbeitet.

In Fig. 1 ist mit 101 eine kreisstromfreie Thyristor-Umrichteranordnung angedeutet, die z.B. aus einer vollgesteuerten dreiphasigen Thyristor-Brückenschaltung besteht, deren Thyristoren weitere Thyristoren, die ebenfalls eine vollgesteuerte dreiphasige Brückenschaltung bilden, antiparallel geschaltet sind. Die Umrichteranordnung 101 ist mit ihren Drehstromanschlüssen über Umrichtertranformatoren 102 an ein dreiphasiges Versorgungsnetz 103 angeschlossen: die gleichstromseitigen Anschlüsse führen zu einem Gleichstrommotor 104. Ein Mikrocomputer 105, der eine zentrale Recheneinheit (CPU) 151, eine Speichereinheit 152 und eine Eingabe-Ausgabeeinheit 153 besitzt, führt arithmetische Operationen zum Regeln der Drehzahl des Gleichstrommotors entsprechend der Erfindung durch. Eine Drehzahl-Einstelleinrichtung 106 liefert einen digitalen Drehzahlsollwert n* an einen entsprechenden Eingabeeingang des Mikrocomputers 105. Der jeweilige Momentanwert i des Stromes wird über einen Stromwandler 107 und einen Gleichrichter 108 erfasst, über einen Analog/Digital-Wandler 109 in einen Digital-Wert umgerechnet und dem Mikrocomputer zugeführt. Ein Synchronisiersignal u ist dem Mikrocomputer von einem Spannungsübertrager 110, der an das Versorgungsnetz 103 angeschlossen ist, und ein Anpassungsglied 111 («Quantisierer») zugeführt. Der jeweilige momentane Drehzahl-Istwert (n) wird über einen an den Motor gekoppelten Tachogenerator 112 erfasst und über einen Analog/digital-Wandler 113 als Digital-Wert dem Mikrocomputer zugeführt. Der Mikrocomputer liefert als Ausgangssignal ein Zündsignal, das einem Impulsverstärker 114 zugeführt ist. Der Impulsverstärker 114 liefert über entsprechende Zündimpulsübertrager 115, 116 den Zündimpuls jeweils an den entsprechenden Thyristor des vom Mikrocomputer ausgewählten Umrichters der Umrichteranordnung.

Man entnimmt dem Flussdiagramm in Fig. 2, dass der Zeitpunkt eines Zündimpulses, an dem ein durch das Auswahlsignal $m_{RST}$ ausgewählter Thyristor einer der beiden Umrichter gezündet wird, als Bezugszeitpunkt für die Bestimmung des Zündzeitpunktes dient, an dem das nächste Zündsignal erzeugt wird. Da die Thyristoren eines Umrichters in einer vollständigen Brückenschaltung an die drei Eingangsphasen R, S, T des Versorgungsnetzes angeschlossen sind, werden die Zündimpulse in Zeitabständen erzeugt, die 60°el. entsprechen, solange ein konstanter Zündwinkel der Thyristoren beibehalten werden soll. Allgemein wird das nächste Zündsignal erzeugt, wenn eine Zeitspanne verstrichen ist, die 60°el. + $\triangle$ m entspricht.

Diese Zeitspanne wird dadurch ermittelt, dass der zeitliche Abstand von 60°el. gegenüber dem Bezugssignal entsprechend dem Ergebnis einer arithmetischen Regeloperation um $\triangle$ m verstellt wird. Wenn der Motorstrom (Ständerstrom der Maschine) kontinuierlich («nicht-lückend») fliesst, wird $\triangle$ m sowohl vom Strom wie der Drehzahl bestimmt. Im anderen Fall («Lückenbetrieb») wird die arithmetische Regeloperation nur von der Drehzahl bestimmt.

Diese Regelvorrichtung hat den Vorteil, dass mit einem minimalen arithmetischen Rechenaufwand für die Regelung eine Anpassung an die Totzeiten der Umrichteranordnung erreicht wird, wobei überflüssige arithmetische Operationen vermieden werden können. Um eine Verschlechterung des Regelverhaltens einer Stromregelung aufgrund einer Verringerung des Verstärkungsfaktors bei lückendem Strom zu vermeiden, wird in diesem Fall als arithmetische Regeloperation nur eine Drehzahlregelung durchgeführt und keine arithmetische Operation für eine Stromregelung durchgeführt.

Da das Ziel der Stromregelung im wesentlichen eine Begrenzung des Stromes ist und Lückstrom nur bei kleinen Strömen auftritt, sind keine Schwierigkeiten infolge der bei Lückstrom unterdrückten Stromregelung zu befürchten. Die Ergebnisse der arithmetischen Regeloperationen werden als ein Signal geliefert, das die Veränderung $\triangle$ m des Zündwinkels beschreibt, so dass ein Umschalten des Regelverfahrens vom lückenden Strom auf nichtlückenden Strom ohne Sprünge in der Steuerung erfolgen kann.

Entsprechend diesen Ausführungen wird das Flussdiagramm von Fig. 2 näher erläutert.

Der Mikrocomputer bestimmt zunächst aus einem aus der Netzspannung u abgeleiteten Synchronisiersignal (entsprechend einem Zählwert $m_p$) die Phase, an der der zu zündende Thyristor angeschlossen ist, wobei unter Berücksichtigung der später erläuterten Drehmonent-Richtungsbestimmung auch festgelegt werden kann, welcher der beiden Gleichrichter der Umrichteranordnung mit dem Zündimpuls angesteuert werden soll (Programmschritte 1 und 2). Zum Beispiel wird die Zündung des an die Phase R des Netzes angeschlossenen Thyristors einer Brückenschaltung eingeleitet, wenn der Zählwert $m_p$ einen vorberechneten Wert $m_R$ erreicht. Der Mikrocomputer liest und speichert sodann den vor Abgabe des Zündimpulses vorliegenden momentanen Stromistwert $i_0$ ein (Programmschritt 3) und erzeugt den Zündimpuls für den im Schritt 2 bestimmten Thyristor (Programmschritt 4).

Daraufhin wird bestimmt, ob der im Schritt 3 eingelesene momentane Stromistwert $i_0$ Null ist oder nicht (Schritt 5). Für $i_0$ = O wird lückender Betrieb angenommen und es folgen die Schritte 11 und 12. Im anderen Fall wird nichtlückender Betrieb mit den Programmschritten 6 und 7 angenommen. Dabei wird der momentane Istwert i des Stromes, der durch das Zündsignal in Schritt 4 hervorgerufen ist, eingelesen und aus einem Speicher ein im vorangegangenen Programmablauf durch eine arithmetische Operation bestimmter Stromsollwert abgerufen. In einer arithmetischen Operation (Teil-Regeloperation) wird eine Stromregelung, insbesondere mit PI-Verhalten, durchgeführt (Programmschritt 6).

Das Ergebnis $\triangle$ m dieser Regeloperation wird als Zündwinkelverschiebung (z.B. in Form einer elektrischen Phasendifferenz oder einer Zeit) zur Bildung eines Schwellwertes $m_0$ für einen in diesem Schritt 7 ebenfalls gestarteten Zählvorgang (Zählvariable m) benutzt.

Wird der Zündwinkel des n-ten Zündimpulses mit $\alpha n$ und des (n-1)-ten Zündwinkels mit $\alpha(n-1)$ bezeichnet, so ergibt sich die Zündwinkeldifferenz zu

$$\triangle m = \alpha n - \alpha(n-1).$$

Sollen beide Zündimpulse mit dem gleichen Zündwinkel erfolgen ($\triangle$ m = O), so muss der folgende Zündimpuls (n-1) um 60°el. versetzt gegenüber dem vorangegangenen Zündimpuls (n-1) erfolgen und der Schwellwert $m_0$ wird entsprechend 60°el. gewählt. Entsprechend muss für $\triangle m \neq O$ der folgende Zündimpuls nach einem Zeitintervall, das 60°el. + $\triangle$ m entspricht, nach dem vorangegangenen Zündimpuls erfolgen. Da der vorangegangene Zündimpuls im Schritt 4 erzeugt wurde, wird im Verlauf des weiteren Programms nach $m_0$ Zählimpulsen (Programmschritt 10) eine Schleife geschlossen und der folgende Zündimpuls erzeugt, wenn wieder der Programmschritt 4 erreicht ist. Die in aufeinanderfolgenden Schleifendurchläufen jeweils im Schritt 4 abgegebenen Zündimpulse haben dann einen zeitlichen Abstand entsprechend 60° + $\triangle$ m.

Im Programmschritt 8 werden Istwert und Sollwert der Drehzahl eingelesen, um in einer weiteren arithmetischen Operation (Teil-Regeloperation) den Stromsollwert für den nächsten Zündimpuls zu bilden und zu speichern. Im Schritt 9 wird festgestellt, ob sich das Vorzeichen der im Schritt 8 gebildeten Grösse, d.h. die Drehrichtung des Drehmomentes, gegenüber dem entsprechenden, im vorangegangenen Durchlauf ermittelten Wert geändert hat. Hat sich die Richtung nicht geändert, so verbleibt der Mikrocomputer im Schritt 10 im Wartezustand, bis der Schwellwert $m_0$ der Zählervariablen m erreicht ist oder es können andere Operationen, z.B. arithmetische Operationen (z.B. zur Anzeige von Geschwindigkeit oder Strom) durchgeführt werden. Ist die im Schritt 7 durch den Schwellwert $m_0$ festgelegte Zeit abgelaufen, so wird der der nächsten Eingangsphase zugeordnete Thyristor in dem gleichen Gleichrichter der Umrichteranordnung 1 gezündet.

Ist dagegen im Schritt 9 festgestellt, dass die Drehrichtung geändert ist, so kann im Programmschritt 13 eine Mindestzeit zum Umschalten von dem bisher angesteuerten Gleichrichter auf den anderen Gleichrichter eingehalten oder auf andere Weise sichergestellt werden, dass der Strom praktisch abgeklungen ist, um dann im nächsten, zu erzeugenden Zündimpuls auf den entsprechenden Thyristor der anderen Brücke umzuschalten.

Ist im Schritt 5 lückender Strom vorgesehen, so wird, wie bereits erwähnt wurde, auf die Programmschritte 11 und 12 übergegangen. Dabei ist keine einer Stromregelung entsprechende abgebraische Operation vorgesehen. Vielmehr wird als Regeloperation nur eine Drehzahlregelung durchgeführt, wobei die Zündwinkelverschiebung $\Delta$ m lediglich aus der Regelabweichung der Drehzahl gebildet wird (Schritt 11). Entsprechend diesem Wert $\Delta$ m wird im Schritt 12 der Schwellwert $m_0$ festgelegt. Anschliessend wird zu dem bereits beschriebenen Programmschritt 8 übergegangen, dem der Schritt 9 mit der Entscheidung über Änderung der Drehrichtung folgt.

Da die Drehzahlregelung im Schritt 11 erfolgt ist, wird der Schritt 8 nur noch zur Bestimmung der Drehrichtung benötigt. Die mathematischen Operationen für die Drehzahlregelung in den Schritten 8 und 11 benutzen zweckmässig Parameter, die für lückenden und nichtlückenden Betrieb verwendbar sind. Beim Programmablauf für lückenden und nichtlückenden Betrieb wird jeweils nur eine arithmetische Operation durch eine andere ausgetauscht, wobei nur eine mathematische Operation zur Veränderung des Zündwinkels selbst ausreicht, es sind also keine weiteren Regeleingriffe zwischen der Abgabe eines Zündimpulses und der Abgabe des nächsten Zündimpulses nötig.

Entsprechend der Erfindung ist kein zusätzlicher Schaltungsaufwand erforderlich, vielmehr kann in einem einfachen Programm von den Regelschritten 6 bis 8 bei nichtlückendem Betrieb auf die Schritte 11 und 12 bei lückendem Betrieb übergegangen werden. Die erfindungsgemässe Vorrichtung ermöglicht damit das gewünschte Regelverhalten und die nötige Stabilität im gesamten Lastbereich, wobei Änderungen in der Regelcharakteristik des geregelten Motorstromes abhängig von dem jeweiligen Stromzustand kompensiert werden.

## Patentansprüche

1. Verfahren zur Drehzahlregelung einer elektrischen Maschine (104), die aus einem Versorgungsnetz (103) über eine Thyristor-Umrichteranordnung (101) gespeist ist, wobei die Zündwinkel der Thyristoren mittels arithmetischen Operationen («Regel-Operationen») vorgegeben werden, durch die die Maschinendrehzahl (n) auf einen eingegebenen Sollwert (n*) eingeregelt wird, dadurch gekennzeichnet, dass vom Zündzeitpunkt eines Thyristors als Bezugszeitpunkt zum Bestimmen des folgenden Zündzeitpunktes für den nächsten Thyristor ausgegangen wird, dass durch jeweils eine arithmetische Regel-Operation der folgende Zündzeitpunkt drehzahlabhängig bestimmt wird, wobei vor dem Durchführen der arithmetischen Regel-Operation entschieden wird, ob der Maschinenstrom (i) lückt oder nicht, und dass als Regel-Operation bei nichtlückendem Strom eine sowohl von dem Maschinenstrom wie der Maschinendrehzahl abhängige arithmetische Operation bzw. bei lückendem Strom eine nur von der Maschinendrehzahl abhängige arithmetische Operation durchgeführt wird.

2. Verfahren nach Anspruch 1, dadurch gekennzeichnet, dass die Thyristor-Umrichteranordnung (101) aus zwei antiparallelen Umrichtern besteht, wobei mit einem Zündimpuls jeweils nur Thyristoren eines Umrichters gezündet werden, dass anschliessend an die Regel-Operation mit einer weiteren arithmetischen Operation die Richtung des Drehmomentes, mit dem die Maschine entsprechend dem eingegebenen Drehzahlsollwert betrieben werden soll, festgestellt wird und dass bei einer festgestellten Änderung der Drehmoment-Richtung mit dem folgenden Zündimpuls der andere Umrichter der Umrichteranordnung (101) angesteuert wird.

## Claims

1. A method for regulating the speed of an electrical machine (104) fed from a supply network (103) by a thyristor converter arrangement (101), where the ignition angles of the thyristors are given by arithmetic operations («regulating operations»), which regulate the machine speed (n) to a theoretical input value (n*), characterised in that the ignition time of a thyristor is taken as a reference time for determining the following ignition time for the next thyristor, that by an arithmetic regulating operation the following ignition time is determined in dependence upon the speed, where prior to the implementation of the arithmetic regulating operation, it is decided whether the machine current (i) is discontinuous or not, and that in the event of a continuous current an arithmetic operation dependent both upon the machine current and the machine speed is carried out as a regulating operation, whereas in the event of a discontinuous current an arithmetic operation which is only dependent upon the machine speed is carried out as a regulating operation.

2. A method as claimed in Claim 1, characterised in that the thyristor converter arrangement (101) consists of two antiparallel converters, where only thyristors of one converter are ignited by an ignition pulse, that following the regulating operation the direction of the torque, by which the machine is to be operated in accordance with the theoretical input speed value, is determined by a further arithmetic operation, and that when a change of the torque direction is established the other converter of the converter arrangement (101) is controlled by the following ignition pulse.

## Revendications

1. Procédé pour régler la vitesse de rotation d'une machine électrique (104) qui est alimentée à partir d'un réseau d'alimentation (103) par l'intermédiaire d'un dispositif convertisseur de fréquence à thyristors (101), et dans lequel les angles d'amorçage des thyristors sont déterminés d'avance au moyen d'opérations arithmétiques («Opérations de réglage») à l'aide desquelles la vitesse de rotation (n) de la machine est réglée sur une valeur de consigne prédéterminée (n*), caractérisé par le fait que l'on part de l'instant d'amorçage d'un thyristor en tant que point de référence pour la détermination de l'instant d'amorçage suivant pour le thyristor immédiatement suivant, qu'on détermine l'instant suivant d'amorçage en fonction de la vitesse de rotation, au moyen d'une opération arithmétique de réglage, auquel cas avant l'exécution de l'opération arithmétique de réglage il est décidé si le courant (i) de la machine est interrompu où non, et que l'opération de réglage exécutée dans le cas d'un courant non interrompu est une opération arithmétique dépendant du courant de la machine ainsi que de la vitesse de rotation de la machine et que l'opération de réglage exécutée dans le cas d'un courant interrompu est une opération arithmétique dépendant uniquement de la vitesse de rotation de la machine.

2. Procédé suivant la revendication 1, caractérisé par le fait que le dispositif convertisseur à thyristors (101) est constitué par deux convertisseurs de fréquence montés selon un montage antiparallèle, une impulsion d'amorçage amorçant respectivement uniquement les thyristors d'un convertisseur de fréquence, qu'à la suite d'une opération de réglage le sens du couple de rotation, avec lequel la machine doit fonctionner conformément à la valeur de consigne introduite de la vitesse de rotation, est fixée lors d'une autre opération arithmétique et que lors de la détection d'une modification du sens du couple de rotation, l'autre convertisseur de fréquence du dispositif convertisseur de fréquence (101) est commandé avec l'impulsion d'amorçage suivante.

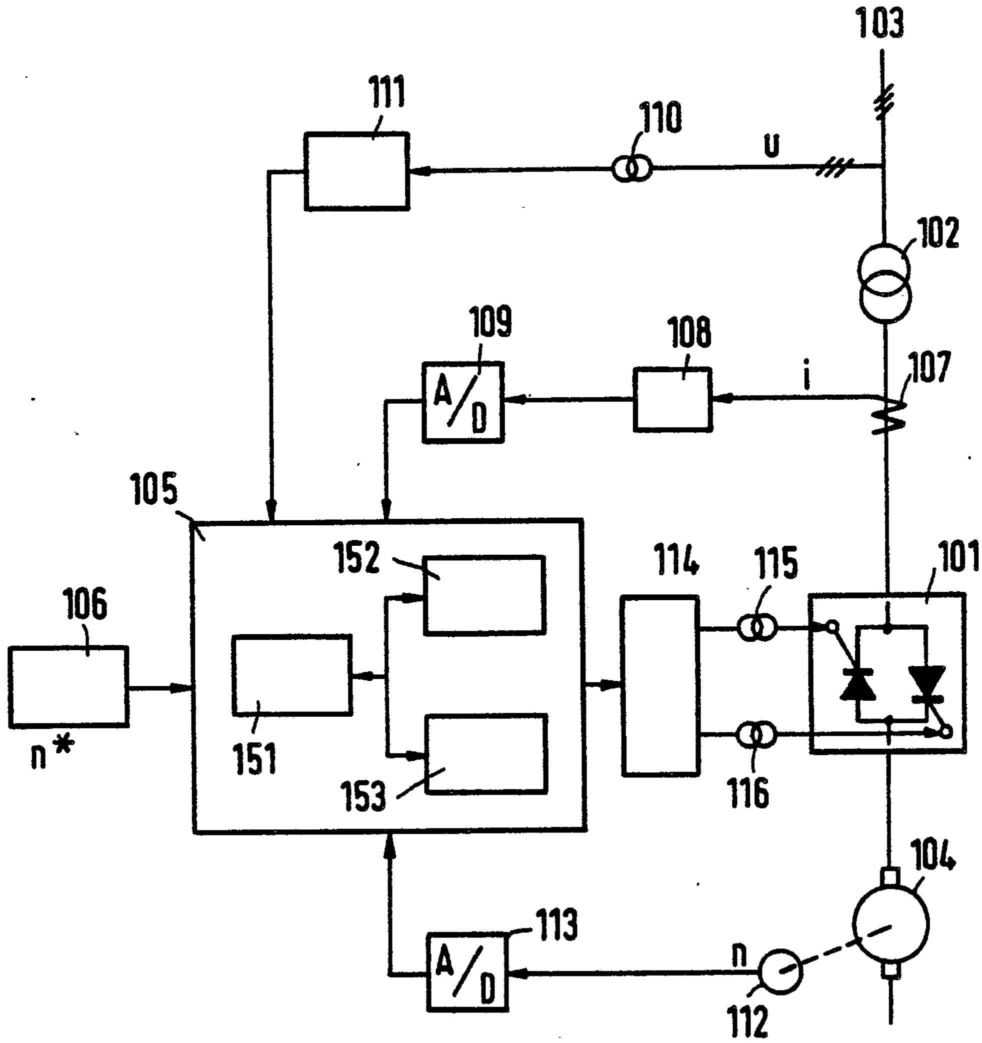
103
111
110
u
102
109
A/D
108
i
107
105
152
114
115
101
106
151
153
116
n*
104
113
A/D
n
112

FIG1

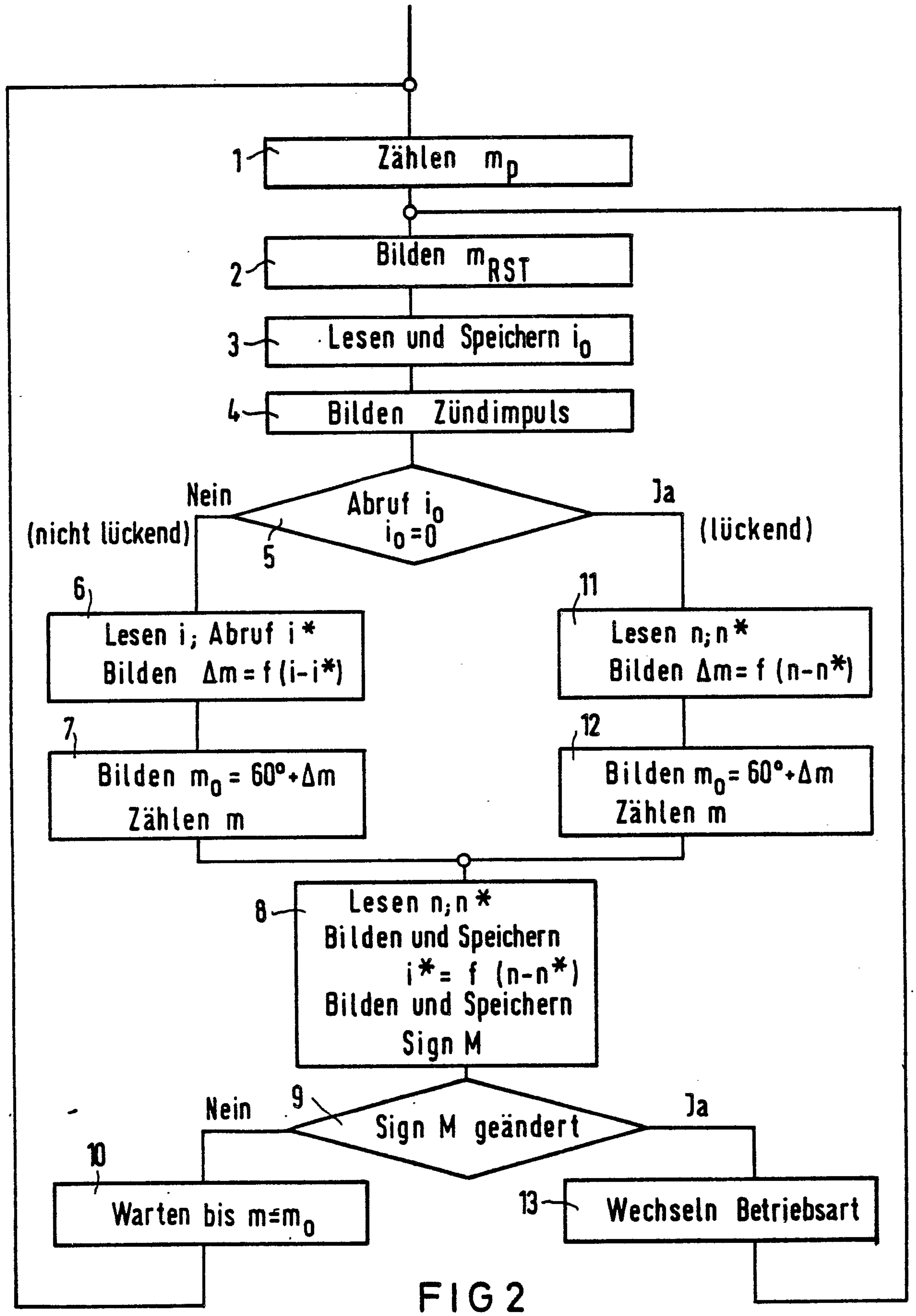
1
Zählen $m_p$
2
Bilden $m_{RST}$
3
Lesen und Speichern $i_0$
4
Bilden Zündimpuls
Nein
(nicht lückend)
Abruf $i_0$
$i_0=0$
5
Ja
(lückend)
6
Lesen i; Abruf i*
Bilden $\Delta m = f(i-i^*)$
7
Bilden $m_0 = 60° + \Delta m$
Zählen m
11
Lesen n; n*
Bilden $\Delta m = f(n-n^*)$
12
Bilden $m_0 = 60° + \Delta m$
Zählen m
8
Lesen n; n*
Bilden und Speichern
$i^* = f(n-n^*)$
Bilden und Speichern
Sign M
9
Nein
Sign M geändert
Ja
10
Warten bis $m = m_0$
13
Wechseln Betriebsart

FIG 2